# EUROPÄISCHE PATENTSCHRIFT

(11) **EP 2 305 084 B1**
(45) Veröffentlichungstag und Bekanntmachung des Hinweises auf die Patenterteilung: **08.02.2012**
(21) Anmeldenummer: 10016235.3
(22) Anmeldetag: 16.02.2010
(51) Int. Cl.: A47J 43/07

(54) **Schneid- und/oder Rühreinheit für Küchenmaschine**
Cutting unit and/or stirring unit for a food processor
Unité de découpe et/ou unité d'agitation pour une machine de cuisine

(30) Priorität: 28.08.2009 DE 202009011685 U
(43) Veröffentlichungstag der Anmeldung: 06.04.2011
(62) Teilanmeldung aus: 10001580.9
(73) Patentinhaber: Schleinzer, Werner, 2361 Laxenburg (AT)
(72) Erfinder: Schleinzer, Werner, 2361 Laxenburg (AT)
(74) Vertreter: Vossius, Tilman

(56) Entgegenhaltungen:
- WO-A2-02/38011
- BE-A- 527 203
- US-A- 3 704 864

## Beschreibung

### GEBIET DER ERFINDUNG

Die vorliegende Erfindung betrifft eine Vorrichtung bzw. Küchenmaschine zur Verarbeitung von Lebensmitteln und insbesondere zur Herstellung von Mischgetränken. Insbesondere betrifft die Erfindung eine Küchenmaschine zur Herstellung von Smoothies aus festen oder flüssigen Lebensmitteln, wie Obst. Gemüse oder dergleichen.

### HINTERGRUND DER ERFINDUNG

Smoothies sind so genannte Ganzfruchtgetränke, bei denen im Gegensatz zu herkömmlichen Fruchtsäften in der Regel die ganze Frucht bis auf die Kerne verarbeitet wird. Basis eines Smoothies ist somit das Fruchtmark oder Fruchtpüree, das Je nach Rezept mit Säften gemischt wird, um eine cremige und sämige Konsistenz zu erhalten. Es gibt aber auch Smoothies, in denen zusätzlich z.B. Joghurt, Milch, Eiscreme oder andere Lebensmittel enthalten sind.

Es sind Küchenmaschinen zur Herstellung von Smoothies bekannt (siehe WO-A-02 38011). Bei diesen bekannten Küchenmaschinen befindet sich am unteren Ende eines Mischbehälters, in den von oben die zu vermischenden Lebensmittel eingebracht werden, eine Schneid- und Rühreinheit mit mehreren Messern, die von einem Motor in Rotation versetzt werden kann, um die Lebensmittel zu zerkleinern und zu verrühren. Am unteren Ende des Mischbehälters befindet sich ferner ein verschließbarer Auslass. über den das im Mischbehälter hergestellte flüssige Endprodukt abfließen kann, beispielsweise in ein unter dem Auslass angeordnetes Trinkglas. Ein Nachteil dieser bekannten Vorrichtungen besteht darin, dass beispielsweise die Schneid- und Rühreinheit in dem Mischbehälter nur schwer zugänglich ist, was die Reinigung dieser Komponente erschwert.

Aufgabe der vorliegenden Erfindung ist es, eine verbesserte Küchenmaschine zur Verarbeitung von Lebensmitteln und insbesondere zur Herstellung von Mischgetränken bereitzustellen.

### ZUSAMMENFASSUNG DER ERFINDUNG

Die vorstehend genannte Aufgabe wird durch eine Küchenmaschine gemäß Anspruch 1 gelöst. Die erfindungsgemäße Küchenmaschine besteht im Wesentlichen aus einer Antriebseinheit, die schwenkbar in einer Halterungseinheit gelagert ist, so dass die Antriebseinheit von eine Ruheposition in eine Betriebsposition und wieder zurück verschwenkt werden kann. Die Küchenmaschine umfasst ferner eine Schneid- und/oder Rühreinheit, die durch die Antriebseinheit betrieben werden kann, und einen Verbindungsabschnitt, der dazu ausgestaltet ist, einen Mischbehälter derart aufzunehmen, dass der Verbindungsabschnitt und der Mischbehälter einen hermetisch abgedichteten Mischraum definieren, in dem die Schneid- und/oder Rühreinheit angeordnet ist bzw. in den die Schneid- und/oder Rühreinheit zumindest teilweise hineinragt. Dabei ist in der Betriebsposition der Antriebseinheit die Schneid- und/oder Rühreinheit derart im unteren Abschnitt des Mischraums angeordnet, dass in dem Mischbehälter vorhandene Lebensmittel aufgrund der Schwerkraft der Schneid- und/oder Rühreinheit zugeführt werden. Die Schneid- und/oder Rühreinheit umfasst eine Welle für die Ankopplung an eine Antriebseinheit, an deren Ende eine im Wesentlichen massive Rührscheibe angeordnet ist. An der Rührscheibe sind mehrere Schneidmesser befestigt, die von der Rührscheibe abstehen. Vorzugsweise weist die Rührscheibe einen Durchmesser von wenigstens ungefähr 2 cm auf.

Vorzugsweise wird der Verbindungsabschnitt durch eine zylindrische Aussparung in der Antriebseinheit ausgebildet. Alternativ können der Verbindungsabschnitt, vorzugsweise in Form einer zylindrischen Schale, und die Schneid- und/oder Rühreinheit als ein aus der Antriebseinheit herausnehmbarer und wieder einsetzbarer Einsatz ausgestaltet sein.

Gemäß einer bevorzugten Ausführungsform sind in der Rührscheibe mehrere halbkreisförmige Löcher vorgesehen, wobei jeweils am Kreisbogen eines halbkreisförmigen Loches in der Rührscheibe eine viertelkugelförmige Kuppel ansetzt. Dabei bilden die Innenseite der viertelkugelförmigen Kuppel und ein halbkreisförmiges Loch jeweils einen Kanal, der eine fluide Kommunikation zwischen der Oberseite und der Unterseite der Rührscheibe ermöglicht.

Weitere vorteilhafte Ausgestaltungen sind in den Unteransprüchen definiert.

### KURZE BESCHREIBUNG DER ZEICHNUNGEN

Die folgenden Figuren stellen bevorzugte Ausführungsbeispiele einer Küchenmaschine zur Verarbeitung von Lebensmitteln und insbesondere zur Herstellung von Mischgetränken dar und dienen der Verdeutlichung der Erfindung.
Figur 1 zeigt eine perspektivische Ansicht einer Küchenmaschine gemäß einer bevorzugten Ausführungsform zur Verarbeitung von Lebensmitteln, und zwar von schräg oben, wobei sich die Antriebseinheit in der Ruheposition befindet.
Figur 2 zeigt die Küchenmaschine von Figur 1, wobei die Antriebseinheit um 180 Grad in die Betriebsposition verschwenkt worden ist.
Figur 3 zeigt die Küchenmaschine von Figur 1, wobei ein Mischbehälter auf die Antriebseinheit in der Ruheposition aufgebracht ist.
Figur 4 zeigt die Küchenmaschine von Figur 3, wobei die Antriebseinheit mit dem daran angebrachten Mischbehälter um 180 Grad in die Betriebsposition der Antriebseinheit verschwenkt worden ist.
Figur 5 zeigt die Küchenmaschine von Figur 1, wobei ein Reinigungsbehälter an die Antriebseinheit angebracht ist und die Antriebseinheit sich in der Betriebsposition befindet.

Die Figuren 6a und 6b zeigen jeweils eine Detailansicht eines Mischbehälters bzw. eines Reinigungsbehälters, die für die Verwendung mit der Küchenmaschine von Figur 1 geeignet sind.

Figur 7 zeigt eine perspektivische Ansicht einer Küchenmaschine gemäß einer weiteren bevorzugten Ausführungsform zur Verarbeitung von Lebensmitteln, bei der die Schneid- und/oder Rühreinheit und der Verbindungsabschnitt als ein aus der Antriebseinheit herausnehmbarer Einsatz ausgebildet sind.

Die Figuren 8a bis 8d zeigen unterschiedliche Ansichten einer bevorzugten Schneid- und/oder Rühreinheit, die für die Verwendung mit der Antriebseinheit der erfindungsgemäßen Küchenmaschine geeignet ist.

### DETAILLIERTE BESCHREIBUNG BEVORZUGTER AUSFÜHRUNGSFORMEN

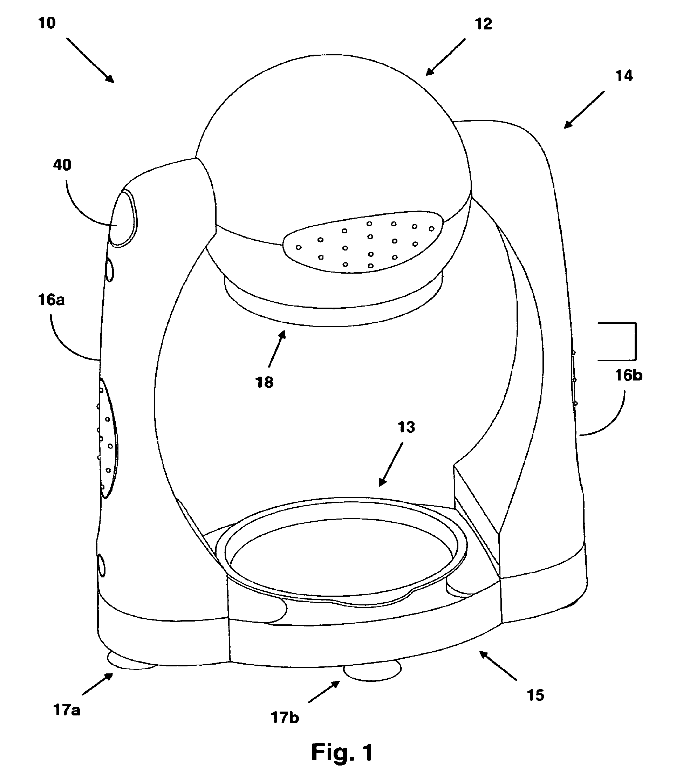

Die Figur 1 zeigt eine Küchenmaschine 10 gemäß einer bevorzugten Ausführungsform zur Verarbeitung von Lebensmitteln und insbesondere zur Herstellung von Mischgetränken aus festen oder flüssigen Lebensmitteln, wie Saft, Milch, Joghurt, Obst, Gemüse und dergleichen. Die Küchenmaschine 10 umfasst eine Antriebseinheit 12, die von einer Halterungseinheit 14 verschwenkbar gehalten wird. Bei der in Figur 1 dargestellten bevorzugten Ausführungsform besteht die Halterungseinheit 14 aus einem Standfuß bzw. einer Basis 15 und zwei Halterungsarmen 16a, 16b, wobei die Antriebseinheit 12 an den oberen Enden der zwei Halterungsarme 16a, 16b verschwenkbar zwischen diesen gelagert ist. An der Unterseite des Standfußes 15 können Saugnäpfe 17 vorgesehen sein, um einen festen Stand der Küchenmaschine 10 auf einem ebenen Untergrund, beispielsweise einer Küchenarbeitsplatte oder einem Küchentisch, zu gewährleisten. Selbstverständlich kann die Halterungseinheit 14 statt zwei Halterungsarme 16a, 16b auch nur einen Halterungsarm umfassen, an dem die Antriebseinheit 12 geeignet gelagert ist.

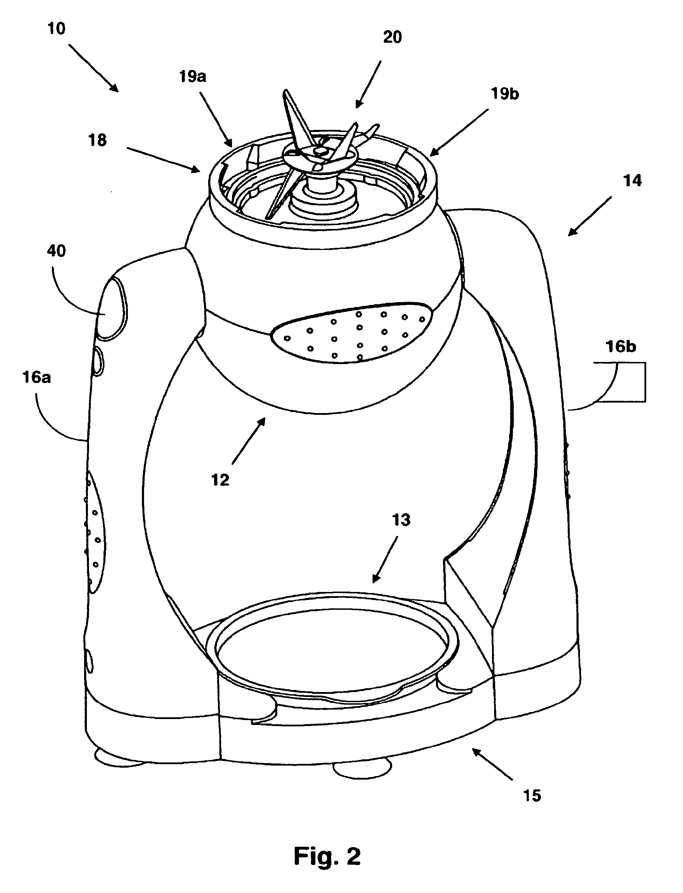

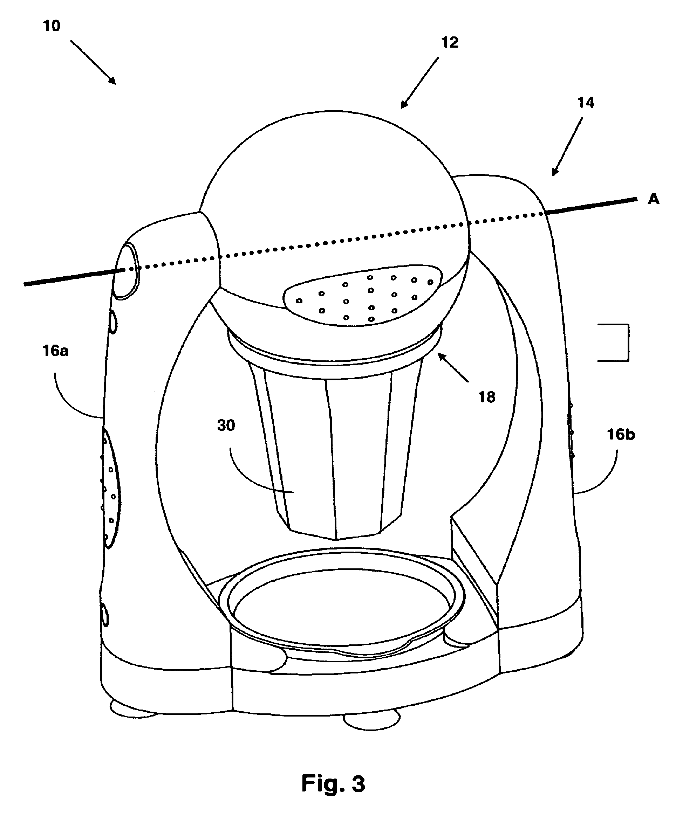

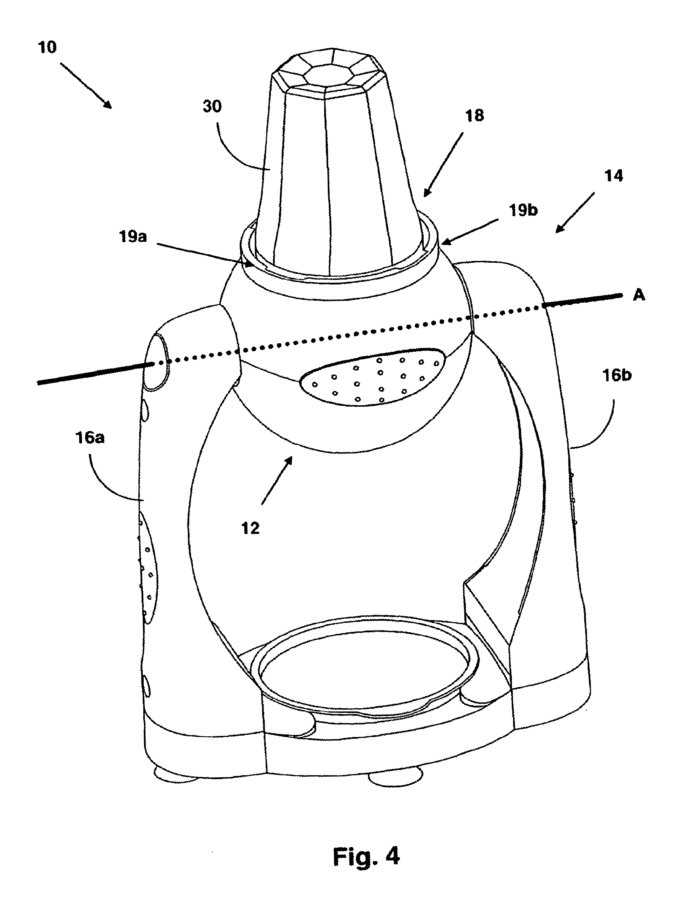

Die Antriebseinheit 12 weist in der in den Figuren dargestellten bevorzugten Ausführungsform im Wesentlichen die Form einer Kugel auf. Wie vorstehend erwähnt, ist die Antriebseinheit 12 zur Rotation um eine Rotationsachse A zwischen den zwei Halterungsarmen 16a, 16b verschwenkbar gelagert (siehe auch Figur 3 und Figur 4). Mit anderen Worten: die Antriebseinheit 12 kann aus einer Ruheposition, die z.B. in Figur 1 dargestellt ist, um 180 Grad in eine Betriebsposition verschwenkt werden, die z.B. in Figur 2 dargestellt ist. Dieses Verschwenken der Antriebseinheit 12 aus der Ruheposition in die Betriebsposition und wieder zurück kann manuell und/oder automatisch erfolgen, beispielsweise mittels eines an der Halterungseinheit 14 vorgesehenen Schalters sowie eines geeigneten motorischen Antriebs (nicht dargestellt).

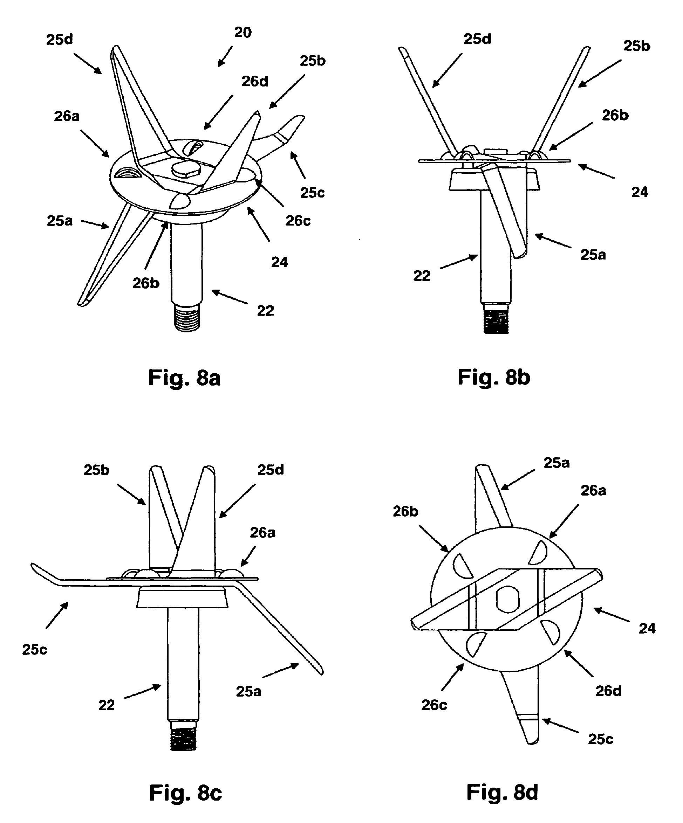

Wie sich dies besonders gut der Figur 2 entnehmen lässt, ist an einem Abschnitt der im Wesentlichen kugelförmigen Antriebseinheit 12, der relativ zu der Rotationsachse A in der Betriebsposition nach oben und in der Ruheposition nach unten absteht, ein Verbindungsabschnitt 18 in Form einer zylindrischen Aussparung vorgesehen. Im Zentrum des Verbindungsabschnitts 18, d.h. im Zentrum der zylindrischen Aussparung, ist eine Schneid- und/oder Rühreinheit 20 angeordnet, deren genaue Ausgestaltung nachstehend unter Bezugnahme auf die Figuren 8a bis 8d beschrieben wird. Dabei ist die Schneid- und/oder Rühreinheit 20 derart beispielsweise mit einem Elektromotor (nicht dargestellt) verbunden, der innerhalb der kugelförmigen Antriebseinheit 12 angeordnet ist, dass die Schneid- und/oder Rühreinheit 20 durch den Elektromotor in Rotation versetzt werden kann.

Der Verbindungsabschnitt 18 der Antriebseinheit 12 ist ferner derart ausgestaltet, einen Mischbehälter 30 derart aufzunehmen, dass der Verbindungsabschnitt 18 zusammen mit dem Mischbehälter 30 einen hermetisch abgedichteten bzw. fluiddichten Mischraum definiert, in dem die Schneid- und/oder Rühreinheit 20 angeordnet ist bzw. in den diese hineinragt. Dabei ist in der Betriebsposition der Antriebseinheit 12 die Schneid- und/oder Rühreinheit 20 derart im unteren Abschnitt des Mischraums angeordnet, dass in dem Mischbehälter 30 vorhandene Lebensmittel aufgrund der Schwerkraft der Schneid- und/oder Rühreinheit 20 zugeführt werden. Diese Betriebsposition der Antriebseinheit 12 ist in Figur 2 ohne einen Mischbehälter und in Figur 4 mit dem Mischbehälter 30 dargestellt.

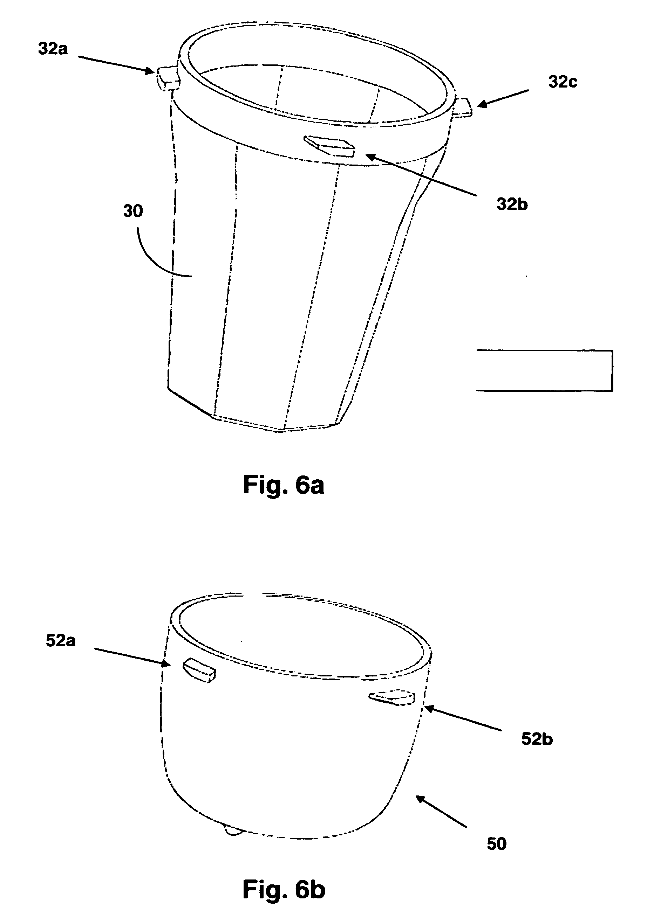

Zur abdichtenden Ineingriffnahme des Mischbehälters 30 durch den Verbindungsabschnitt 18 sind an der Innenseite des Umfangs des Verbindungsabschnitts 18 vorzugsweise vier jeweils diametral gegenüberliegende Einführungsschlitze 19a, 19b (von denen zwei in Figur 2 sichtbar sind) vorgesehen, die einen größeren Innendurchmesser als die Innenseite des Umfangs des Verbindungsabschnitts 18 aufweisen. Diese Einführungsschlitze 19a, 19b sind dazu ausgestaltet, komplementär geformte Zapfen 32a, 32b, 32c gleicher Anzahl aufzunehmen, die am oberen Ende des Mischbehälters 30 angeordnet sind, radial abstehen und sich entlang des Umfangs des Mischbehälters 30 erstrecken, wie sich dies der Figur 6a entnehmen lässt. An ihren unteren Enden gehen die Einführungsschlitze 19a, 19b jeweils in einen ein Stück in Umfangsrichtung verlaufenden Nutabschnitt über. Dabei verjüngt sich ein jeweiliger Nutabschnitt mit zunehmendem Abstand von dem mit diesem in Verbindung stehenden Einführungsschlitz 19a, 19b. Diese Ausgestaltung der jeweiligen Nutabschnitte bewirkt, dass beim Drehen des mit seinen Zapfen 32a, 32b, 32c in die Einführungsschlitze 19a, 19b eingebrachten Mischbehälters 30 in Umfangsrichtung die Zapfen 32a, 32b, 32c in die Nutabschnitte eingebracht werden und der Mischbehälter 30 in Richtung des Bodens des Verbindungsabschnitts 18 bewegt wird und damit gegen die Antriebseinheit 12 gepresst wird. Vorzugsweise ist am Boden des Verbindungsabschnitts 18 der Antriebseinheit 12 ein elastisches Dichtungselement, beispielsweise ein Dichtungsring (nicht dargestellt), derart dimensioniert und angeordnet, dass beim Verriegeln des Mischbehälters 30 in den Nutabschnitten der obere Rand des Mischbehälters 30 auf das Dichtungselement gepresst wird.

Durch die vorstehend beschriebene verriegelnde Ineingriffnahme des Mischbehälters 30 durch die Antriebseinheit 12 bzw. dessen Verbindungsabschnitt 18 in Form einer zylindrischen Aussparung wird, wie vorstehend beschrieben, zwischen dem Verbindungsabschnitt 18 und dem Mischbehälter 30 ein fluidisch abgedichteter Mischraum definiert, in den die Schneid- und/oder Rühreinheit 20 hineinragt. Wie sich dies insbesondere aus einer Zusammenschau der Figuren 2 und 4 ergibt, ist in der Betriebsposition der Antriebseinheit 12 die Schneid- und/oder Rühreinheit 20 im unteren Abschnitt des fluidisch abgedichteten Mischraums angeordnet, der durch die Antriebseinheit 12 bzw. durch dessen Verbindungsabschnitt 18 und durch den Mischbehälter 30 definiert wird.

Die erfindungsgemäße Küchenmaschine 10 ist dazu ausgestaltet, vorzugsweise folgendermalien verwendet zu werden. Anfangs befindet sich die Antriebseinheit 12 in der in Figur 1 dargestellten Ruheposition, wobei der Mischbehälter 30 nicht an der Antriebseinheit 12 angebracht ist. Der Benutzer füllt die zu vermischenden Lebensmittel in den Mischbehälter 30 und bringt den mit den zu vermischenden Lebensmitteln bis zu einer bestimmten Höhe gefüllten Mischbehälter 30 an den Verbindungsabschnitt 18 der Antriebseinheit 12 in deren Ruheposition an. Wie vorstehend bereits beschrieben, führt der Benutzer hierzu die Zapfen 32a, 32b, 32c am oberen Ende des Mischbehälters 30 in die entsprechenden Einführungsschlitze 19a, 19b des Verbindungsabschnitts 18 ein. Dabei führt der Benutzer den Mischbehälter 30 nach oben in Richtung der Antriebseinheit 12 und bewirkt gleichzeitig eine Drehbewegung des Mischbehälters 30, so dass die Zapfen 32a, 32b, 32c am oberen Ende des Mischbehälters 30 in die Nutabschnitte eingebracht werden und der Mischbehälter 30 gegen die Antriebseinheit 12 gepresst wird. Der Fachmann wird erkennen, dass während dieser Ineingriffnahme des Mischbehälters 30 durch die Antriebseinheit 12 aufgrund der Schwerkraft die zu vermischenden Lebensmittel bis zu einer bestimmten Höhe im unteren Abschnitt des Mischbehälters 30 verbleiben, ohne dass es zu einer Berührung der zu vermischenden Lebensmitteln mit der Schneid- und/oder Rühreinheit 20 oder Teilen davon kommen muss (was jedoch ebenfalls möglich ist).

Sobald der mit den zu vermischenden Lebensmitteln gefüllte Mischbehälter 30 mit dem Verbindungsabschnitt 18 bzw. der Antriebseinheit 12 in eine fluiddichte, verriegelnde Ineingriffnahme gebracht worden ist, kann der Benutzer die Antriebseinheit 12 mit dem daran angebrachten Mischbehälter 30 um 180 Grad in die in Figur 4 dargestellte Betriebsposition verschwenken. Dies kann, wie vorstehend erwähnt, manuell oder automatisch erfolgen. Der Fachmann wird erkennen, dass bei diesem Schwenkvorgang der Antriebseinheit 12 mit dem daran angebrachten Mischbehälter 30 die in dem Mischbehälter 30 vorhandenen, zu vermischenden Lebensmittel der Schwerkraft folgen und sich im oberen Abschnitt des Mischbehälters 30 ansammeln. Mit anderen Worten: durch diesen Schwenkvorgang der Antriebseinheit 12 mit dem daran angebrachten Mischbehälter 30 um 180 Grad in die Betriebsposition werden die zu vermischenden Lebensmittel in dem Mischbehälter 30 der Schneid- und/oder Rühreinheit 20 zugeführt. In dieser Betriebsposition kann die Schneid- und/oder Rühreinheit 20 durch den Elektromotor der Antriebseinheit 12 in Rotation versetzt werden, so dass die in dem Mischbehälter 30 vorhandenen Lebensmittel geschnitten und/oder verrührt werden. Zur Beendigung des Mischvorgangs wird die Antriebseinheit 12 mit dem daran angebrachten Mischbehälter 30 wieder um 180 Grad in die Ruheposition verschwenkt und der Mischbehälter 30 kann von dem Verbindungsabschnitt 18 und der Antriebseinheit 12 abgenommen werden. Um eine Verunreinigung des Standfußes 15 nach der Abnahme des Mischbehälters 30 von der Antriebseinheit 12 durch an der Schneid- und/oder Rühreinheit 20 oder dem Verbindungsabschnitt 18 verbliebene und herabtropfende Lebensmittel bzw. Flüssigkeitsreste zu vermeiden, kann eine abnehmbare Abtropfschale 13 auf dem Standfuß 15 vorgesehen sein.

Vorzugsweise weist die erfindungsgemäße Küchenmaschine 10 zur Betätigung des Elektromotors der Antriebseinheit 12 und damit zur Rotation der Schneid- und Rühreinheit 20 einen Einrastschalter 40 auf. In der Ruheposition der Antriebseinheit 12 befindet sich der Einrastschalter 40, der in der in den Figuren dargestellten bevorzugten Ausführungsform an einem der Halterungsarme 16a, 16b angeordnet ist, in einer eingefahrenen bzw. eingerasteten Position. Beim Verschwenken der Antriebseinheit 12 um 180 Grad in die in Figur 4 dargestellte Betriebsposition rastet der Einrastschalter 40 aus und bewegt sich aufgrund einer Vorspannung, beispielsweise mittels einer Feder, in eine ausgefahrene Position. In dieser ausgefahrenen Position des Einrastschalters 40 wird der Elektromotor der Antriebseinheit 12 mit einem Strom beaufschlagt und die Schneid- und/oder Rühreinheit 20 in Rotation versetzt. Sobald der Einrastschalter 40 gegen die Vorspannung wieder in die eingefahrene Position bewegt wird und dort einrastet, wird die Strombeaufschlagung des Elektromotors der Antriebseinheit 12 unterbrochen und somit die Rotationsbewegung der Schneid- und/oder Rühreinheit 20 gestoppt. Alternativ oder zusätzlich kann die Rotationsbewegung der Schneid- und/oder Rühreinheit 20 dadurch beendet werden, dass die Antriebseinheit 12 zusammen mit dem Mischbehälter 30 wieder in Richtung der Ruheposition der Antriebseinheit 12 verschwenkt wird und dadurch der Einrastschalter gegen die Vorspannung wieder in die eingefahrene Position bewegt wird und dort einrastet. Diese Ausgestaltung hat den Vorteil, dass sichergestellt werden kann, dass die Schneid- und/oder Rühreinheit 20 nur in der Betriebsposition der Antriebseinheit 12 eine Rotationsbewegung durchführen kann. Selbstverständlich ist es ebenso möglich, dass die Strombeaufschlagung des Elektromotors der Antriebseinheit 12 über einen externen Schalter (nicht dargestellt) erfolgt, der beispielsweise an der Halterungseinheit 14 vorgesehen ist.

Als weitere Sicherheitsfunktion kann die erfindungsgemäße Küchenmaschine 10 mindestens einen Sicherheitsschalter (nicht dargestellt) umfassen, mit dem sichergestellt werden kann, dass der Elektromotor der Antriebseinheit 12 die Schneid- und/oder Rühreinheit 20 nur dann in Rotation versetzen kann, wenn ein Mischbehälter 30 oder ein nachstehend detaillierter beschriebener Reinigungsbehälter 50 von dem Verbindungsabschnitt 18 fluiddicht in Eingriff genommen wird. Vorzugsweise ist ein solcher Sicherheitsschalter in dem Nutabschnitt eines Einführungsschlitzes 19a, 19b des Verbindungsabschnitts 18 angeordnet. Wenn kein Mischbehälter 30 an der Antriebseinheit 12 angebracht ist, ragt der Sicherheitsschalter aufgrund einer Vorspannung in den Nutabschnitt eines Einführungsschlitzes 19a, 19b des Verbindungsabschnitts 18 hinein. In dieser ausgefahrenen Position des Sicherheitsschalters (Aus-Position) unterbricht der Sicherheitsschalter die Strombeaufschlagung des Elektromotors der Antriebseinheit 12. Wird nun ein Mischbehälter 30, wie vorstehend beschrieben, in eine fluiddichte Ineingriffnahme mit dem Verbindungsabschnitt 18 gebracht, so drückt ein in den Nutabschnitt eingebrachter Zapfen 32a, 32b, 32c des Mischbehälters 30 den Sicherheitsschalter gegen die Vorspannung in eine eingefahrene Position. In dieser eingefahrenen Position des Sicherheitsschalters (Ein-Position) erfolgt keine Unterbrechung der Strombeaufschlagung des Elektromotors der Antriebseinheit 12 durch den Sicherheitsschalter. Vorzugsweise ist jeweils ein Sicherheitsschalter in dem Nutabschnitt von mehr als einem Einführungsschlitz 19a, 19b vorgesehen, so dass bei Reinigungsarbeiten mit spitzen Gegenständen im Bereich der Einführungsschlitze 19a, 19b des Verbindungsabschnitts 18 und deren Nutabschnitten eine zusätzliche Sicherheit gewährleistet ist.

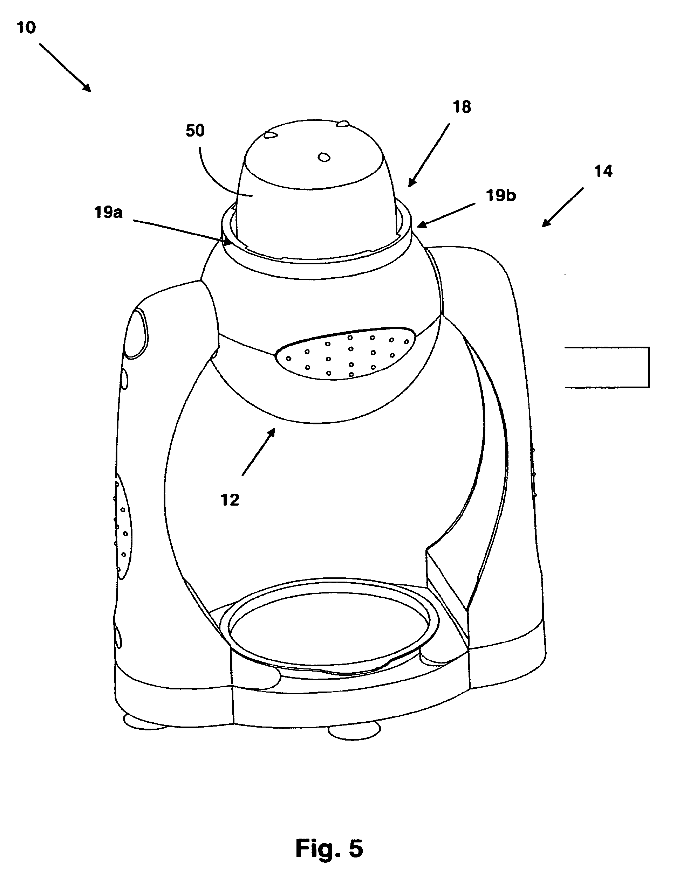

Zur Reinigung der erfindungsgemäßen Küchenmaschine 10 ist vorzugsweise ein Reinigungsbehälter 50 vorgesehen, der in Figur 6b einzeln dargestellt ist und in Figur 5 an die in die Betriebsposition verschwenkte Antriebseinheit 12 angebracht ist. Bis auf ein kleineres Volumen und eine leicht andere Form entspricht die Ausgestaltung des Reinigungsbehälters 50 im Wesentlichen der Ausgestaltung des vorstehend beschriebenen Mischbehälters 30. Insbesondere umfasst der Reinigungsbehälter 50 an seinem oberen Rand ebenso eine Vielzahl von Zapfen 52a, 52b für die fluiddichte Ineingriffnahme mit dem Verbindungsabschnitt 18 der Antriebseinheit 12 (siehe Figur 6b). Zur Reinigung der erfindungsgemäßen Küchenmaschine 10 kann der Reinigungsbehälter 50 mit einer Reinigungsflüssigkeit, beispielsweise Wasser und/oder eine Spülflüssigkeit, befüllt werden. Wie der Fachmann erkennt, muss der Reinigungsbehälter 50 aufgrund des Schwenkmechanismus der erfindungsgemäßen Küchenmaschine 10 für eine Reinigung nicht vollständig befüllt werden. Es kann beispielsweise ausreichen, wenn der Reinigungsbehälter 50 nur bis zur Hälfte oder mit einem kleineren Volumen befüllt wird. Nachdem der Reinigungsbehälter 50, wie vorstehend für den Mischbehälter 30 beschrieben, in der Ruheposition der Antriebseinheit 12 in eine fluiddichte Ineingriffnahme mit dem Verbindungsabschnitt 18 gebracht worden ist, wird die Antriebseinheit 12 zusammen mit dem daran angebrachten Reinigungsbehälter 50 um 180 Grad in die Betriebsposition der Antriebseinheit 12 verschwenkt. Wie vorstehend für den Mischbehälter 30 beschrieben, folgt bei diesem Schwenkvorgang der Antriebseinheit 12 mit dem daran angebrachten Reinigungsbehälter 50 die in dem Reinigungsbehälter 50 vorhandene Reinigungsflüssigkeit der Schwerkraft und sammelt sich im oberen Abschnitt des Reinigungsbehälters 50 an, in den die Schneid- und/oder Rühreinheit 20 hineinragt. In dieser Betriebsposition kann die Schneid- und/oder Rühreinheit 20 durch den Elektromotor der Antriebseinheit 12 in Rotation versetzt werden, so dass die in dem Reinigungsbehälter 50 vorhandene Reinigungsflüssigkeit verrührt wird und in Kontakt im Wesentlichen mit dem Boden und den Innenseiten des Verbindungsabschnitts 18 und mit der Schneid- und/oder Rühreinheit 20 gebracht wird. Zur Beendigung des Reinigungsvorgangs wird die Antriebseinheit 12 mit dem daran angebrachten Reinigungsbehälter 50 wieder um 180 Grad in die Ruheposition verschwenkt und der Reinigungsbehälter 50 kann von der Antriebseinheit 12 abgenommen werden.

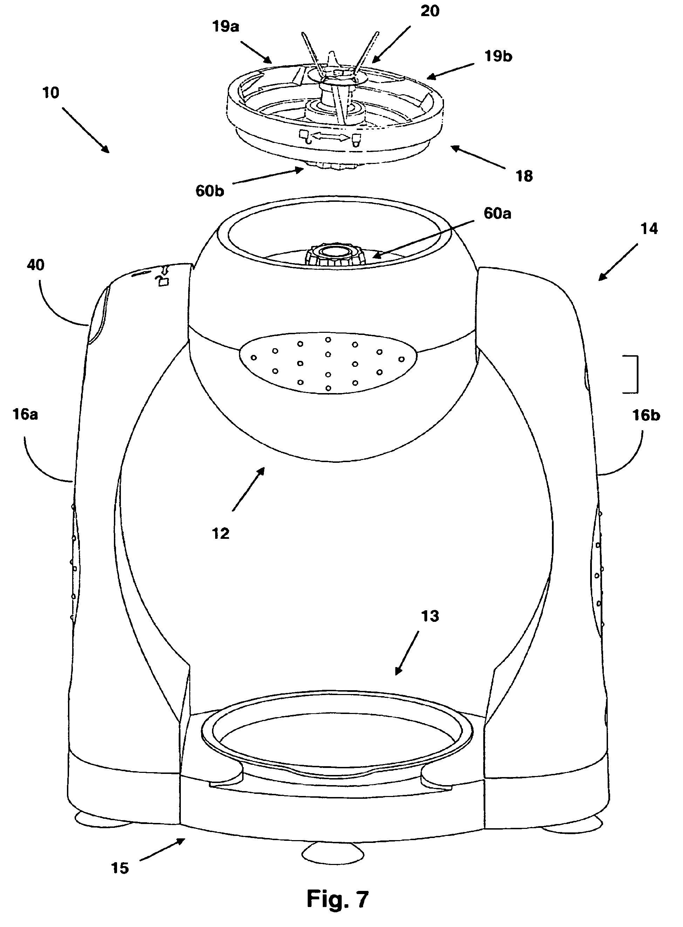

Gemäß einer weiteren bevorzugten Ausführungsform der Erfindung, die in Figur 7 dargestellt ist, sind der Verbindungsabschnitt 18 und die Schneid- und/oder Rühreinheit 20 als ein aus der Antriebseinheit 12 herausnehmbarer und wieder einsetzbarer Einsatz ausgestaltet. Dabei weist der Verbindungsabschnitt 18 im Wesentlichen die Form einer zylindrischen Schale auf, die in eine komplementär ausgebildete, zylindrische Aussparung passt, die in der Antriebseinheit 12 ausgebildet ist. Diese Ausgestaltung, bei der die Schneid- und/oder Rühreinheit 20 und der Verbindungsabschnitt 18 eine Einheit bilden und nicht wie bei der vorstehend beschriebenen Ausführungsform die Antriebseinheit 12 und der Verbindungsabschnitt 18, weist den Vorteil auf, dass bei einer starken Verunreinigung des Verbindungsabschnitts 18 und/oder der Schneid- und/oder Rühreinheit 20 der aus diesen Elementen bestehende Einsatz komplett aus der Antriebseinheit 12 herausgenommen werden kann, um den Einsatz, bestehend aus Verbindungsabschnitt 18 und Schneid- und/oder Rühreinheit 20, manuell oder in einer Geschirrspülmaschine zu reinigen. Nach der Reinigung kann der Einsatz wieder in die Antriebseinheit 12 eingesetzt werden. Selbstverständlich muss bei dieser Ausgestaltung die Verbindung zwischen dem Einsatz, bestehend aus Verbindungsabschnitt 18 und Schneid- und/oder Rühreinheit 20, und der Antriebseinheit 12 im eingesetzten Zustand derart sein, dass die Schneid- und/oder Rühreinheit 20 weiterhin vom Elektromotor angetrieben werden kann, der in der Antriebseinheit 12 untergebracht ist. Dies kann beispielsweise durch ein entsprechend ausgestaltetes Paar von ineinander greifenden Zahnrädern 60a, 60b erfolgen, wobei das eine Zahnrad 60a mit der Welle des Elektromotors der Antriebseinheit 12 verbunden ist und zentral in der zylindrischen Aussparung der Antriebseinheit 12 angeordnet ist und das andere Zahnrad 60b mit der Welle der Schneid- und/oder Rühreinheit 20 verbunden ist und an der Unterseite des Verbindungsabschnitts 18 angeordnet ist. Dabei sind die beiden Zahnräder 60a, 60b im eingesetzten Zustand des Einsatzes, bestehend aus Verbindungsabschnitt 18 und Schneid- und Rühreinheit 20, derart relativ zueinander angeordnet, dass sich diese gegenseitig in Eingriff nehmen, so dass der Elektromotor der Antriebseinheit 12 die Schneid- und/oder Rühreinheit 20 in Rotation versetzen kann.

Bei dieser in Figur 7 dargestellten Ausführungsform, bei der der Verbindungsabschnitt 18 und die Schneid- und/oder Rühreinheit 20 als ein aus der Antriebseinheit 12 herausnehmbarer und wieder einsetzbarer Einsatz ausgebildet sind, kann optional als weitere Sicherheitsfunktion ein Verriegelungsmechanismus vorgesehen sein. Beispielsweise kann ähnlich wie das hinsichtlich der vorstehenden Ausführungsform beschriebene Anbringen eines Mischbehälters 30 an dem Verbindungsabschnitt 18 bzw. der Antriebseinheit 12 das Einsetzen des Einsatzes in die Antriebseinheit 12 aus einer geradlinigen Einführbewegung sowie einer Drehbewegung bestehen, um den Einsatz, bestehend aus Verbindungsabschnitt 18 und Schneid- und/oder Rühreinheit 20, in der Antriebseinheit 12 zu verriegeln. Ferner kann ein Sicherheitsmechanismus vorgesehen sein, der derart ausgestaltet ist, dass ein Mischbehälter 30 nur in der Ruheposition der Antriebseinheit 12 an den in die Antriebseinheit 12 eingesetzten Einsatz angebracht bzw. von dieser abgenommen werden kann und/oder dass der Einsatz, bestehend aus Verbindungsabschnitt 18 und Schneid- und/oder Rühreinheit 20, nur in der Antriebsposition der Antriebseinheit 12 in diese eingesetzt bzw. von dieser abgenommen werden kann. Ein derartiger Sicherheitsmechanismus kann beispielsweise derart ausgestaltet sein, dass für das Abnehmen eines Mischbehälters 30 die Antriebseinheit 12 zunächst in die Ruheposition verschwenkt werden muss. In dieser Ruheposition der Antriebseinheit 12 lässt sich der Einsatz nicht abnehmen, so dass nur der Mischbehälter 30 abgenommen werden kann. Um auch den Einsatz, bestehend aus Verbindungsabschnitt 18 und Schneid- und/oder Rühreinheit 20, abnehmen zu können, muss die Antriebseinheit 12, von der der Mischbehälter 30 bereits abgenommen worden ist, wieder in die Betriebsposition verschwenkt werden.

In den Figuren 8a bis 8d sind verschiedene Ansichten einer bevorzugten Schneid- und/oder Rühreinheit 20 dargestellt, die besonders vorteilhaft mit den vorstehend beschriebenen erfindungsgemäßen Ausführungsformen einer Küchenmaschine 10 verwendet werden kann. Die Schneid- und/oder Rühreinheit 20 umfasst eine Welle 22 für die Ankopplung an eine geeignet ausgestaltete Antriebseinheit, beispielsweise die vorstehend beschriebene Antriebseinheit 12. An einem Ende der Welle 22 ist senkrecht zu der Längsachse der Welle 22 eine im Wesentlichen massive Rührscheibe 24 angeordnet. Eine derartige Scheibe ist prinzipiell zur Verwendung in Handmixgeräten zum Schlagen von Sahne bekannt. Dabei wird durch die schnelle Rotation der Scheibe die flüssige Sahne aufgrund der Adhäsionskräfte durch die Scheibe mitbewegt und mit Luft versetzt, was die Ausbildung von Schlagsahne befördert. Überraschenderweise hat sich im Rahmen der vorliegenden Erfindung herausgestellt, dass eine Kombination einer derartigen Scheibe zum Schlagen von Sahne mit einer Vielzahl von Messern, die in unterschiedlichen Richtungen von der Scheibe abstehen, eine Schneid- und/oder Rühreinheit ergibt, die sich besonders vorteilhaft zur Herstellung von Mischgetränken, wie beispielsweise Smoothies, eignet. Demgemäß sind an der Rührscheibe 24 der bevorzugten Schneid- und/oder Rühreinheit 20 mehrere Schneidmesser 25a, 25b, 25c, 25d befestigt, die in unterschiedlichen Richtungen von der Rührscheibe 24 abstehen. Zwei Messer können jeweils einstückig ausgestaltet sein, wie beispielsweise die von der Oberseite der Rührscheibe 24 abstehenden Messer 25b und 25d. Wie der Fachmann erkennt, handelt es sich bei der Oberseite der Rührscheibe 24 um die von der Welle 22 abgewandte Seite der Rührscheibe 24. Von ihrem Anbringungspunkt im Zentrum der Oberseite der Rührscheibe 24 verlaufen die Messer 25b und 25d zunächst parallel zu der Rührscheibe 24 radial nach außen, um dann beispielsweise in einem Winkel von 20 bis 70 Grad gegenüber der durch die Rührscheibe 24 definierten Ebene nach oben abzustehen. Wie sich dies beispielsweise der Figur 8d entnehmen lässt, ist der Durchmesser der Rührscheibe 24 bedeutend größer als der Abschnitt der Messer 25b und 25d, in dem diese sich parallel zu der Rührscheibe 24 radial nach außen erstrecken. Vorzugsweise beträgt der Durchmesser der Scheibe 24 mindestens ungefähr 2 cm, weiter bevorzugt mindestens ungefähr 3 cm.

Gemäß einer bevorzugten Ausführungsform sind in der Rührscheibe 24 ferner mehrere halbkreisförmige Löcher vorgesehen. Dabei setzt jeweils am Kreisbogen eines halbkreisförmigen Loches in der Rührscheibe 24 eine viertelkugelförmige Kuppel 26a, 26b, 26c. 26d an und wölbt sich jeweils über ein halbkreisförmiges Loch auf der Oberseite der Rührscheibe 24, d.h. auf der von der Welle 22 abgewandten Seite der Rührscheibe 24. Dabei bilden die Innenseite einer viertelkugelförmigen Kuppel und ein halbkreisförmiges Loch jeweils einen Kanal, der eine fluide Kommunikation zwischen der Oberseite und der Unterseite der Rührscheibe 24 ermöglicht.

Wie in den Figuren 8a bis 8d dargestellt, weist eine bevorzugte Schneid- und/oder Rühreinheit 20 vorzugsweise vier Messer 25a, 25b, 25c, 25d auf, die von der Rührscheibe 24 abstehen, sowie vier halbkreisförmige Löcher in der Rührscheibe 24 mit jeweils einer sich darüber wölbenden viertelkugelförmige Kuppel 26a, 26b, 26c, 26d. Wie sich dies besonders gut den Figuren 8a und 8c entnehmen lässt und wie bereits vorstehend beschrieben, stehen zwei der Messer, nämlich die Messer 25b und 25d, der bevorzugten Schneid- und/oder Rühreinheit 20 von der Oberseite der Rührscheibe 24 nach oben ab, und zwar beispielsweise in einem Winkel gegenüber der durch die Rührscheibe 24 definierten Ebene von 20 bis 70 Grad. Aufgrund dieser Ausgestaltung rotieren die Messer 25b und 25d der bevorzugten Schneid- und/oder Rühreinheit 20 in der Betriebsposition der Antriebseinheit 12, falls ein Mischbehälter 30 (bzw. Reinigungsbehälter 50) an den Verbindungsabschnitt 18 der Antriebseinheit 12 angebracht ist, in dem zwischen der Oberseite der Rührscheibe 24 und der Innenseite des Mischbehälters 30 definierten Abschnitt des Mischraums, der durch die fluiddichte Ineingriffnahme des Mischbehälters 30 durch den Verbindungsabschnitt 18 ausgebildet wird. Vorzugsweise verläuft eines der Messer, nämlich das Messer 25c, im Wesentlichen in der Ebene der Rührscheibe 24, so dass im Betrieb das Messer 25c im Wesentlichen in dem durch den Rand der Rührscheibe 24 und die Innenseite des Mischbehälters 30 definierten Abschnitt des Mischraums rotiert, der durch die fluiddichte Ineingriffnahme des Mischbehälters 30 durch den Verbindungsabschnitt 18 ausgebildet wird. Das vierte Messer 25a steht vorzugsweise von der Unterseite der Rührscheibe 24 nach unten ab, und zwar beispielsweise in einem Winkel gegenüber der durch die Rührscheibe 24 definierten Ebene von 20 bis 70 Grad. Aufgrund dieser Ausgestaltung rotiert das Messer 25a im Betrieb in dem zwischen der Unterseite der Rührscheibe 24, der Innenseite des Mischbehälters 30 und dem Boden des Verbindungsabschnitts 18 definierten Abschnitt des Mischraums, der durch die fluiddichte Ineingriffnahme des Mischbehälters 30 durch den Verbindungsabschnitt 18 ausgebildet wird.

Wie sich dies besonders gut den Figuren 8a und 8d entnehmen lässt, sind die vier halbkreisförmigen Löcher mit den sich jeweils darüber wölbenden viertelkugelförmigen Kuppeln 26a, 26b, 26c, 26d derart auf der Rührscheibe 24 angeordnet, dass die Öffnungen der durch die halbkreisförmigen Löcher und die viertelkugelförmigen Kuppeln 26a, 26b, 26c, 26d ausgebildeten Kanäle auf der Oberseite der Rührscheibe 24 in eine der Rotationsrichtungen weisen. Die Öffnungen der durch die halbkreisförmigen Löcher und die viertelkugelförmigen Kuppeln 26a, 26b, 26c, 26d ausgebildeten Kanäle auf der Oberseite der Rührscheibe 24 können alle in eine Rotationsrichtung weisen oder, wie in den Figuren 8a und 8d dargestellt, können zwei der Öffnungen in Richtung des Uhrzeigersinns und zwei der Öffnungen in eine Richtung entgegen dem Uhrzeigersinn weisen. Diese besondere Ausgestaltung der Schneid- und Rühreinheit 20 sorgt für eine besonders angenehme Konsistenz des Mischgetränks. Noch andere Orientierungen der Öffnungen sind selbstverständlich ebenfalls möglich.

Die erfindungsgemäße Küchenmaschine 10 weist aus den folgenden Gründen Vorteile gegenüber herkömmlichen Küchenmaschinen auf. Alle Elemente der erfindungsgemäßen Küchenmaschine 10, die in Kontakt mit Lebensmitteln kommen, d.h. der Verbindungsabschnitt 18, die Schneid- und/oder Rühreinheit 20 und der Mischbehälter 30, sind ohne weiteres zugänglich und lassen sich leicht reinigen. Anhand der vorstehend beschriebenen Ausführungsformen erkennt der Fachmann, dass auf der Basis der erfindungsgemäßen Küchenmaschine weitere vorteilhafte Ausgestaltungen verwirklicht werden können. Insbesondere erkennt der Fachmann, dass die Halterungseinheit zahlreiche unterschiedliche Formen annehmen kann. Wesentlich ist lediglich, dass die Halterungseinheit ein Lager für die Antriebseinheit bereitstellt, das der Antriebseinheit ein Verschwenken aus einer Ruheposition in eine Betriebsposition und wieder zurück ermöglicht. Ferner wird der Fachmann erkennen, dass die Ineingriffnahme des Mischbehälters durch den Verbindungsabschnitt zur Ausbildung eines Mischraums, in den die Schneid- und/oder Rühreinheit hineinragt, auch durch einen anderen Mechanismus als das hier beschriebene Zusammenwirken der Einführungsschlitze und Nutabschnitte des Verbindungsabschnitts mit den Zapfen des Mischbehälters verwirklicht werden kann. Weiterhin erkennt der Fachmann, dass, obgleich die vorliegende Erfindung im Zusammenhang mit einer Küchenmaschine zur Herstellung von Mischgetränken beschrieben worden ist, der erfindungsgemäße Schwenkmechanismus ebenso vorteilhaft bei anderen Küchenmaschinen zur Verarbeitung von Lebensmitteln eingesetzt werden kann, beispielsweise einer Küchenmaschine zum Mahlen von Kaffeebohnen. Schließlich wird der Fachmann erkennen, dass die hierin verwendeten Begriff, wie "oben" bzw. "unten", "vorne" bzw. "hinten" und dergleichen, nicht dazu gedacht sind, die Orientierung der dadurch näher gekennzeichneten erfindungsgemäßen Elemente in irgendeiner Weise zu beschränken, sondern lediglich dazu dienen, diese Elemente von einander zu unterscheiden.

### Bezugszeichenliste:

- 10: Küchenmaschine
- 12: Antriebseinheit
- 13: Abtropfschale
- 14: Halterungseinheit
- 15: Standfuß
- 16a, 16b: Halterungsarme
- 17: Saugnäpfe
- 18: Verbindungsabschnitt
- 19a. 19b: Einführungsschlitze
- 20: Schneid- und/oder Rühreinheit
- 22: Welle
- 24: Rührscheibe
- 25a-d: Messer
- 26a-d: viertelkugelförmige Kuppeln
- 30: Mischbehälter
- 32a, 32b: Zapfen des Mischbehälters
- 40: Einrastschalter
- 50: Reinigungsbehälter
- 52a, 52b: Zapfen des Reinigungsbehälters
- 60a, 60b: Zahnräder
- A: Rotationsachse

## Patentansprüche

1. Küchenmaschine (10) zur Verarbeitung von Lebensmitteln, wobei die Küchenmaschine (10) umfasst:
eine Antriebseinheit (12), die eine Schneid- und/oder Rühreinheit (20) aufweist und schwenkbar in einer Halterungseinheit (14) gelagert ist, so dass die Antriebseinheit (12) zusammen mit der Schneid- und/oder Rühreinheit (20) von einer Ruheposition in eine Betriebsposition und wieder zurück verschwenkt werden kann; und
einen Verbindungsabschnitt (18) der dazu ausgestaltet ist, einen Mischbehälter (30) derart aufzunehmen, dass der Verbindungsabschnitt (18) und der Mischbehälter (30) einen hermetisch abgedichteten Mischraum definieren, in dem die Schneid- und/oder Rühreinheit (20) angeordnet ist;
wobei in der Betriebsposition der Antriebseinheit (12) die Schneid- und/oder Rühreinheit (20) derart im unteren Abschnitt des Mischraums angeordnet, dass in dem Mischbehälter (30) vorhandene Lebensmittel aufgrund der Schwerkraft der Schneid- und/oder Rühreinheit (20) zugeführt werden; und
wobei die Schneid- und/oder Rühreinheit (20) umfasst:
eine im Wesentlichen massive Rührscheibe (24), die über eine Welle (22) an die Antriebseinheit (12) angekoppelt werden kann, so dass die Rührscheibe (24) von der Antriebseinheit (12) in Rotation versetzt werden kann; und
wenigstens ein Messer (25a, 25b, 25c, 25d), das an der Rührscheibe (24) befestigt ist und von der Rührscheibe (24) absteht.

2. Küchenmaschine (10) nach Anspruch 1, wobei in der Rührscheibe (24) wenigstens ein halbkreisförmiges Loch vorgesehen ist und am Kreisbogen des halbkreisförmigen Loches eine viertelkugelförmige Kuppel (26a, 26b, 26c, 26d) ansetzt, so dass die Innenseite der viertelkugelförnügen Kuppel und ein halbkreisförmiges Loch einen Kanal ausbilden, der eine fluide Kommunikation zwischen der Oberseite und der Unterseite der Rührscheibe (24) ermöglicht.

3. Küchenmaschine (10) nach Anspruch 1, wobei der Durchmesser der Rührscheibe (24) mindestens ungefähr 2 cm, vorzugsweise mindestens ungefähr 3 cm beträgt.

4. Küchenmaschine (10) nach Anspruch 2 oder Anspruch 3, wobei die Schneid- und Rühreinheit (20) vier Messer (25a, 25b, 25c, 25d) und vier halbkreisförmige Löcher mit vier sich über die Löcher wölbenden viertelkugelförmigen Kuppeln (26a, 26b, 26c, 26d) umfasst.

5. Küchenmaschine (10) nach Anspruch 1, wobei die Halterungseinheit (14) zur verschwenkbaren Lagerung der Antriebseinheit (12) einen Standfuß (15) und zwei Halterungsarme (16a, 16b) umfasst.

6. Küchenmaschine (10) nach Anspruch 1, wobei der Verbindungsabschnitt (18) durch eine zylindrische Aussparung in der Antriebseinheit (12) ausgebildet wird.

7. Küchenmaschine (10) nach Anspruch 1, wobei der Verbindungsabschnitt (18), vorzugsweise in Form einer zylindrischen Schale, und die Schneid- und/oder Rühreinheit (20) als ein aus der Antriebseinheit (12) herausnehmbarer und wieder einsetzbarer Einsatz ausgestaltet sind.

8. Küchenmaschine (10) nach Anspruch 6 oder 7, wobei an der Innenseite des Umfangs des Verbindungsabschnitts (18) mehrere Einführungsschlitze (19a, 19b) vorgesehen sind, die dazu ausgestaltet sind, komplementär geformte Zapfen (32a, 32b, 32c) eines Mischbehälters (30) aufzunehmen.

9. Küchenmaschine (10) nach Anspruch 8, wobei die Einführungsschlitze (19a, 19b) jeweils in einen ein Stück in Umfangsrichtung verlaufenden Nutabschnitt übergehen, wobei sich ein jeweiliger Nutabschnitt mit zunehmendem Abstand von dem mit diesem in Verbindung stehenden Einfizhrungsschlitz (19a, 19b) verjüngt, so dass beim Einbringen der Zapfen (32a, 32b, 32c) eines Mischbehälters (30) in die Nutabschnitte der Einführungsschlitze (19a, 19b) der Mischbehälter (30) gegen den Boden des Verbindungsabschnitts (18) gepresst wird.

10. Küchenmaschine (10) nach Anspruch 9, wobei wenigstens ein Sicherheitsschalter unter Vorspannung in den Nutabschnitt von einem der Einführungsschlitze (19a, 19b) hineinragt, wobei in dieser ausgefahrenen Position des Sicherheitsschalters die Strombeaufschlagung der Antriebseinheit (12) unterbrochen ist und wobei dann, wenn ein Mischbehälter (30) in eine fluiddichte Ineingriffnahme mit der Antriebseinheit (12) gebracht wird, ein in den Nutabschnitt eingebrachter Zapfen (32a, 32b, 32c) des Mischbehälters (30) den Sicherheitsschalter gegen die Vorspannung in eine eingefahrene Position drückt, in der die Unterbrechung der Strombeaufschlagung der Antriebseinheit (12) aufgehoben ist.

11. Küchenmaschine (10) nach Anspruch 1, wobei die Küchenmaschine (10) derart ausgestaltet ist, dass das Verschwenken der Antriebseinheit (12) zusammen mit der Schneid- und/oder Rühreinheit (20) von der Ruheposition in die Betriebsposition um einen Winkel von 180 Grad erfolgt.

12. Küchenmaschine (10) nach Anspruch 1, wobei die Küchenmaschine ferner einen Einrastschalter (40) zur Strombeaufschlagung der Antriebseinheit (12) umfasst, der derart angeordnet und ausgestaltet ist, dass dieser sich in der Ruheposition der Antriebseinheit (12) in einer eingerasteten Position befindet, in der die Strombeaufschlagung der Antriebseinheit (12) durch den Einrastschalter (40) unterbrochen ist, und beim Verschwenken der Antriebseinheit (12) in die Betriebsposition aufgrund einer Vorspannung ausrastet und die Antriebseinheit (12) mit einem Strom zur Rotation der Schneid- und/oder Rühreinheit (20) beaufschlagt.

## Claims

1. Kitchen appliance (10) for processing food, wherein the kitchen appliance (10) comprises:
a drive unit (12), which has a cutting and/or stirring unit (20) and is swivel-mounted in a support unit (14) so that the drive unit (12), together with the cutting and/or stirring unit (20), can be swiveled from a rest position into an operating position and back again; and
an attachment section (18) which is designed to accommodate a mixing container (30) in such a way that the attachment section (18) and the mixing container (30) define a hermetically sealed mixing space, in which the cutting and/or stirring unit (20) is located;
wherein, when the drive unit (12) is in the operating position, the cutting and/or stirring unit (20) is arranged in the lower section of the mixing space in such a way that food located in the mixing container (30) is fed to the cutting and/or stirring unit (20) due to gravity; and
wherein the cutting and/or stirring unit (20) comprises:
an essentially solid stirrer plate (24), which can be coupled through a shaft (22) to the drive unit (12) so that the stirrer plate (24) can be set in rotation by the drive unit (12); and
at least one blade (25a, 25b, 25c, 25d), which is attached to the stirrer plate (24) and projects therefrom.

2. Kitchen appliance (10) according to claim 1, wherein at least one semicircular hole is provided in the stirrer plate (24) and a quadrant-shaped dome (26a, 26b, 26c, 26d) is connected to the circular arc of the semicircular hole, so that the inside of the quadrant-shaped dome and a semicircular hole form a passage that permits fluid communication between the top and bottom of the stirrer plate (24).

3. Kitchen appliance (10) according to claim 1, wherein the diameter of the stirrer plate (24) is at least approximately 2 cm, preferably at least approximately 3 cm.

4. Kitchen appliance (10) according to claim 2 or claim 3, wherein the cutting and stirring unit (20) includes four blades (25a, 25b, 25c, 25d) and four semicircular holes with four quadrant-shaped domes (26a, 26b, 26c, 26d) arching over the holes.

5. Kitchen appliance (10) according to claim 1, wherein the support unit (14) includes a base (15) and two support arms (16a, 16b) for swivel-mounting of the drive unit (12).

6. Kitchen appliance (10) according to claim 1, wherein the attachment section (18) is formed by a cylindrical recess in the drive unit (12).

7. Kitchen appliance (10) according to claim 1, wherein the attachment section (18), preferably in the form of a cylindrical dish, and the cutting and/or stirring unit (20) are designed as an insert that can be removed from and replaced back in the drive unit (12).

8. Kitchen appliance (10) according to claims 6 or 7, wherein, provided on the inside of the circumference of the attachment section (18) are multiple pilot slots (19a, 19b), which are designed to accommodate lugs (32a, 32b, 32c) of complementary shape of a mixing container (30).

9. Kitchen appliance (10) according to claim 8, wherein each of the pilot slots (19a, 19b) transitions to a groove section expending a short distance in the circumferential direction, wherein each groove section narrows with increasing distance from the pilot slot (19a, 19b) standing in connection therewith, so that when the lugs (32a, 32b, 32c) of a mixing container (30) are introduced into the groove sections of the pilot slots (19a, 19b), the mixing container (30) is pressed against the floor of the attachment section (18).

10. Kitchen appliance (10) according to claim 9, wherein at least one safety switch projects under preloading into the groove section of one of the pilot slots (19a, 19b), wherein in this extended position of the safety switch, the supply of electricity to the drive unit (12) is interrupted, and wherein, if a mixing container (30) is brought into a fluid-tight engagement with the drive unit (12), a lug (32a, 32b, 32c) of the mixing container (30) introduced into the groove section pushes the safety switch against the preloading into a retracted position in which the interruption in the supply of electricity to the drive unit (12) is removed.

11. Kitchen appliance (10) according to claim 1, wherein the kitchen appliance (10) is designed such that the swiveling of the drive unit (12) together with the cutting and/or stirring unit (20) from the rest position into the operating position takes place about an angle of 180 degrees.

12. Kitchen appliance (10) according to claim 1, wherein the kitchen appliance further comprises a detent switch (40) for supplying electricity to the drive unit (12) that is positioned and designed such that it is in a snapped-in position when the drive unit (12) is in the rest position, in which position the electricity supply to the drive unit (12) is interrupted by the detent switch (40), and when the drive unit (12) swivels into the operating position snaps out due to a biasing and supplies electricity to the drive unit (12) for rotation of the cutting and/or stirring unit (20).

## Revendications

1. Appareil de cuisine (10) pour le traitement d'aliments, dans lequel l'appareil de cuisine (10) comprend:
une unité motrice (12), qui présente une unité de coupe et/ou d'agitation (20) et qui est placée, avec faculté de pivotement, dans une unité de support (14), de telle manière que l'unité motrice (12), conjointement avec l'unité de coupe et/ou d'agitation (20), peut être basculée d'une position de repos à une position de fonctionnement et vice-versa; et
une section de raccordement (18) qui y est agencée pour accueillir un récipient de mélange (30) de telle manière que la section de raccordement (18) et le récipient de mélange (30) définissent un espace de mélange hermétiquement clos, dans lequel est disposée l'unité de coupe et/ou d'agitation (20);
tandis que dans la position de fonctionnement de l'unité motrice (12) l'unité de coupe et/ou d'agitation (20) est disposée dans la section inférieure de l'espace de mélange de telle manière que les aliments présents dans le récipient de mélange (30) sont acheminés sous l'effet de la pesanteur dans l'unité de coupe et/ou d'agitation (20); et
tandis que l'unité de coupe et/ou d'agitation (20) comporte:
un disque d'agitation essentiellement massif (24), qui peut être relié par l'intermédiaire d'un arbre (22) à l'unité motrice (12), de telle manière que le disque d'agitation (24) puisse être mis en rotation par l'unité motrice (12); et
au moins une lame (25a, 25b, 25c, 25d), qui est fixée au disque d'agitation (24) et s'éloigne du disque d'agitation (24).

2. Appareil de cuisine (10) selon la revendication 1, dans lequel il est prévu dans le disque d'agitation (24) au moins un trou semi-circulaire, et sur l'arc de cercle du trou semi-circulaire est placée une coupole en forme de quart de sphère (26a, 26b, 26c, 26d), de telle manière que la face interne de la coupole en forme de quart de sphère et un trou semi-circulaire forment un canal permettant une communication de fluide entre la face supérieure et la face inférieure du disque d'agitation (24).

3. Appareil de cuisine (10) selon la revendication 1, dans lequel le diamètre du disque d'agitation (24) est d'au moins environ 2 cm, de préférence d'au moins environ 3 cm.

4. Appareil de cuisine (10) selon la revendication 2 ou la revendication 3, dans lequel l'unité de coupe et d'agitation (20) comporte quatre lames (25a, 25b, 25c, 25d) et quatre trous semi-circulaires avec quatre coupoles en forme de quart de sphère (26a, 26b, 26c, 26d) formant voûte au-dessus des trous.

5. Appareil de cuisine (10) selon la revendication 1, dans lequel l'unité de support (14) pour loger avec faculté de basculement l'unité motrice (12) comporte un pied de soutènement (15) et deux bras de maintien (16a, 16b).

6. Appareil de cuisine (10) selon la revendication 1, dans lequel la section de raccordement (18) est formée par un évidement cylindrique dans l'unité motrice (12).

7. Appareil de cuisine (10) selon la revendication 1, dans lequel la section de raccordement (18) est de préférence sous la forme d'une cuvette cylindrique, et l'unité de coupe et/ou d'agitation (20) présente la forme d'un insert pouvant être retiré de l'unité motrice (12) et à nouveau monté sur celle-ci.

8. Appareil de cuisine (10) selon la revendication 6 ou 7, dans lequel sont prévues, sur la paroi intérieure de la périphérie de la section de raccordement (18), plusieurs entailles d'introduction (19a, 19b), qui sont configurées pour accueillir des tenons de forme complémentaire (32a, 32b, 32c) d'un récipient de mélange (30).

9. Appareil de cuisine (10) selon la revendication 8, dans lequel les entailles d'introduction (19a, 19b) passent à chaque fois dans une section formant gorge, se déployant légèrement dans la direction circonférentielle, tandis qu'une section formant gorge se rétrécit à chaque fois à mesure que l'on s'éloigne de l'entaille d'introduction (19a, 19b) qui est en liaison avec celle-ci, de telle manière que lors de l'introduction des tenons (32a, 32b, 32c) d'un récipient de mélange (30) dans les sections formant gorge des entailles d'introduction (19a, 19b), le récipient de mélange (30) est comprimé contre le fond de la section de raccordement (18).

10. Appareil de cuisine (10) selon la revendication 9, dans lequel au moins un interrupteur de sécurité avance avec précontrainte dans la section formant gorge de l'une des entailles d'introduction (19a, 19b) tandis que, dans cette position sortie de l'interrupteur de sécurité l'alimentation en courant de l'unité motrice (12) est interrompue et que, quand un récipient mélangeur (30) est amené en situation d'emboîtement avec étanchéité aux liquides avec l'unité motrice (12), un tenon (32a, 32b, 32c) du récipient mélangeur (30), introduit dans la section formant gorge presse l'interrupteur de sécurité contre la précontrainte dans une position rentrée dans laquelle l'interruption de l'alimentation en courant de l'unité motrice (12) est levée.

11. Appareil de cuisine (10) selon la revendication 1, dans lequel l'appareil de cuisine (10) est agencé de telle manière que le basculement de l'unité motrice (12) s'effectue d'un angle de 180 degrés conjointement avec l'unité de coupe et/ou d'agitation (20) de la position de repos à la position de fonctionnement.

12. Appareil de cuisine (10) selon la revendication 1, dans lequel l'appareil de cuisine comporte en outre un interrupteur à verrouillage (40) pour l'alimentation en courant de l'unité motrice (12), qui est agencé et conçu de telle manière qu'il se trouve, dans la position de repos de l'unité motrice (12), dans une position verrouillée dans laquelle l'alimentation en courant de l'unité motrice (12) est interrompue par l'interrupteur à verrouillage (40), et lors du basculement de l'unité motrice (12) dans la position de fonctionnement se déverrouille sous l'effet d'une précontrainte et alimente l'unité motrice (12) avec un courant pour la rotation de l'unité de coupe et/ou d'agitation (20).
